Europäisches Patentamt

European Patent Office

Office européen des brevets

(19)

(11) Publication number: **0 457 482 A1**

(12)     **EUROPEAN PATENT APPLICATION**

(21) Application number: **91304141.4**

(22) Date of filing: **08.05.91**

(51) Int. Cl.⁵: **H04N 1/40**

(30) Priority: **18.05.90 GB 9011168**
**08.08.90 GB 9017360**

(43) Date of publication of application:
**21.11.91 Bulletin 91/47**

(84) Designated Contracting States:
**DE GB**

(71) Applicant: **CROSFIELD ELECTRONICS LIMITED**
**P.O. Box 102, Wedgwood Way**
**Stevenage, Hertfordshire SG1 4QN (GB)**

(72) Inventor: **Manley, George Charles**
**23 Hybrun Close, Bricket Wood**
**St. Albans, Hertfordshire AL2 3QX (GB)**
Inventor: **Tucker, Peter**
**12 Olympia Close, East Hunsbury**
**Northampton NN4 0RU (GB)**

(74) Representative: **Skone James, Robert Edmund et al**
**GILL JENNINGS & EVERY 53-64 Chancery Lane**
**London WC2A 1HN (GB)**

(54) **Scanning method and apparatus.**

(57)    Apparatus for scanning an image with a constant frequency component, such as a screened image, to generate a binary representation of the image. The apparatus comprises a scanner (1) for scanning the image in a series of lines and for sampling the image during the scanning of each line. A binary signal generator (2) generates for each sample a binary output value dependent on the relationship between the sampled value and a predetermined threshold. A controller (3,6) controls one or more of the frequency at which the image is sampled during the scanning of each line, and the position at which a scan line is first sampled. The controller is adapted to generate different sampling frequencies and/or first sample positions during the scanning process.

THRESHOLD

Fig.1

EP 0 457 482 A1

The invention relates to a method and apparatus for scanning an image with a constant frequency component to generate a binary representation of the image.

There are a variety of images which include a constant frequency component, one of the most common being a screened image. Such images are often scanned or sampled to generate a binary representation for inputting the image to a facsimile system or for computer analysis.

In such a system the screened image is scanned either by a sweeping illuminating aperture or spot or by a detector. At predefined times a reading of the signal level at the detector is taken. For each of these samples a decision is typically made as to whether or not to make the corresponding stored or written point a black or a white. This form of binary encoding is useful for purposes of image data compression in a facsimile system or for efficient use of memory in any image manipulation system. A reading of grey levels would simply provide too much information for most purposes. Such decision making is often called thresholding, and any signal above a predefined level causes a binary 1 to be allocated at this position, otherwise a binary 0 is recorded. Advanced systems can have dynamic thresholding which can predict where the most suitable thresholding level should be for the given scanning and sampling conditions.

Many projected anti-Moire systems recognise the differences between the set threshold level and the real signal representing the true grey level value, and can transfer a proportion of the difference to the adjoining sampling positions. This is known as error-diffusion, and many technical publications contain discussions of the relative advantages of different algorithms to match specific types of input data. The major drawbacks to the method lie in the immense levels of data to be manipulated, and the fact that each final decision must contain information about its neighbouring sample positions. Typically the data needs to be processed at very high speed, and ideally a separate decision has to be taken as to which algorithm to use at any given time. This makes for an expensive and messy method of reducing the Moire.

In accordance with one aspect of the present invention, a method of scanning an image with a constant frequency component to generate a binary representation of the image comprises scanning the image in a series of lines, the image being sampled during the scanning of each line; and for each sample generating a binary output value dependent upon the relationship between the sampled value and a predetermined threshold, characterised in that one or more of the sampling frequency, the predetermined threshold, and the position at which a scan line is first sampled is varied during the sampling process.

In accordance with the second aspect of the present invention, apparatus for scanning an image with a constant frequency component to generate a binary representation of the image comprises scanning means for scanning the image in a series of lines and for sampling the image during the scanning of each line; binary signal generating means for generating for each sample a binary output value dependent on the relationship between the sampled value and a predetermined threshold; and control means for controlling one or more of the frequency at which the image is sampled during the scanning of each line, the predetermined threshold, and the position at which a scan line is first sampled the control means being adapted to generate different sampling frequencies and/or thresholds and/or first sample positions and/or thresholds during the scanning process.

The invention takes an entirely different approach to the problems of avoiding Moire. Instead of attempting to compensate for Moire, the invention avoids the generation of Moire initially.

Moire is a natural by-product of the beat between the constant frequency component, eg the spatial frequencies of the screen to be analysed, against the sampling frequency. The constant frequency component, eg the input screen, is beyond the control of the machine operator - typically it is a customer-provided image. However the operator does have the choice of sampling frequency, threshold and start of scan line. Recently it has become common to select obscure resolutions of scan designed to minimise the effects of Moire. These frequencies can be predicted by suitable Fourier analysis of the image, and is generally very successful in reducing the Moire content of specific screen rulings and angles.

The main part of this invention lies in the recognition that the Moire beat is only unacceptable on the sampled image if the dark/light Moire bands are physically coherent across several or many scan lines. Each scanned line can have Moire provided that its peaks and troughs do not physically correspond with their equivalents on the next scanned line. The spacing of these peaks and troughs is predictable by the standard techniques mentioned above.

In some cases, the sampling frequency and/or threshold may be varied after each scan line. However, this is not essential and the sampling frequency and/or threshold could be varied after every pair of lines, every three lines etc or even within a scan line. In this latter case, the scan frequency can vary as the line is scanned in a pseudo-random fashion. This is a more dramatic variation than the once-per-line method and has been developed because the randomisation can be controlled such that over a given short spatial period (e.g. 1 cm) the average scan frequency is a constant. This allows a reader only variation and does not affect compression systems. A subset of this method is to make the next and subsequent scan lines either have different pseudo-random fluctuations or the same with a pseudo-random phase dither.

Preferably, the sampling frequencies are selected so as to average out to a predetermined mean value. In general, a desired mean sampling frequency will be chosen and then the actual frequencies will vary by small amounts from that chosen value. A similar approach can be taken in the case of varied thresholds.

The sampling frequency and/or threshold and/or start of scan line could be varied in some predetermined manner but in a preferred example they vary (pseudo) randomly.

For example, each sampling frequency may be chosen in accordance with the formula:

$$(X - dX) + 2.dX.RND$$

where $X$ is a nominal scanning resolution, for example in lines per inch, $dX$ is some predetermined difference value, and RND is a random number between zero and one. This will result in a mean scan frequency of $X$ lines per inch.

Provided that any writer system used to output the copy runs at a matched frequency for each line the copy maintains spatial integrity - a line read 3cm. from a given datum will still reproduce as 3cm. from the datum. The value of $dX$ can be very small in percentage terms. Simulations of the idea have used values as low as 1/4% of the nominal resolution with great success.

In another example, the frequency is constant along the scan, and in successive scan lines, with the phase of the moire beat shifted from line to line. This is done by effectively dithering the spatial position of the first sampling point relative to the input screen by a pseudo-random amount. This again destroys the cross-line correlation of the moire pattern and removes moire visibility in the component axis dithered. This is particularly valuable in compression systems and is a reader-only modification, the writer device needs no modification.

In the most preferred example, the start of scan position is varied in phase by 180° between successive scan lines.

This approach, avoiding the need for randomisation, relies upon the form of structure of the Moire pattern. In the case of a screened image, the dots making up the screen vary in area across the image. When this variation is spatially coherent this repeated dot area change shows as a Moire pattern. The spacing of dark and light bands follows a pseudo-sinusoidal pattern. This is because (in a facsimile system) the dot areas must grow as integer multiples of the pixel area. The spatial frequency of the pattern is typically many screen dots pitch. If alternate lines are scanned in anti-phase this forces the darker bands from any scan line to reproduce adjacent to lighter bands in the next scan. As the two scan lines are not resolved by the eye these light and dark bands complement and integrate to a uniform grey across the scan, thereby reducing the visual contrast level of the Moire pattern to a virtual zero.

The major application for this idea is in the design of detector arrays such as CCD/television camera detectors. This concept would allow Moire free sampling and image formation at virtually no extra cost to the system. This is a significant (and previously insoluble) problem in the broadcasting industry.

The images which are scanned will most commonly comprise screened images but the invention is applicable to all images with a constant frequency component.

Further, the scanning process may involve conventional article scanning but could also involve scanning other representations of the image, for example by sampling pre-stored data.

The apparatus may be implemented using hardware circuits or by a suitably programmed micro computer. Hardware circuits are more applicable to the scanning of screened images in hard copy when analogue signals are obtained while the microprocessor version is more appropriate to scanning of pre-stored digital images.

Two examples of the invention will now be described with reference to the accompanying drawings in which:-

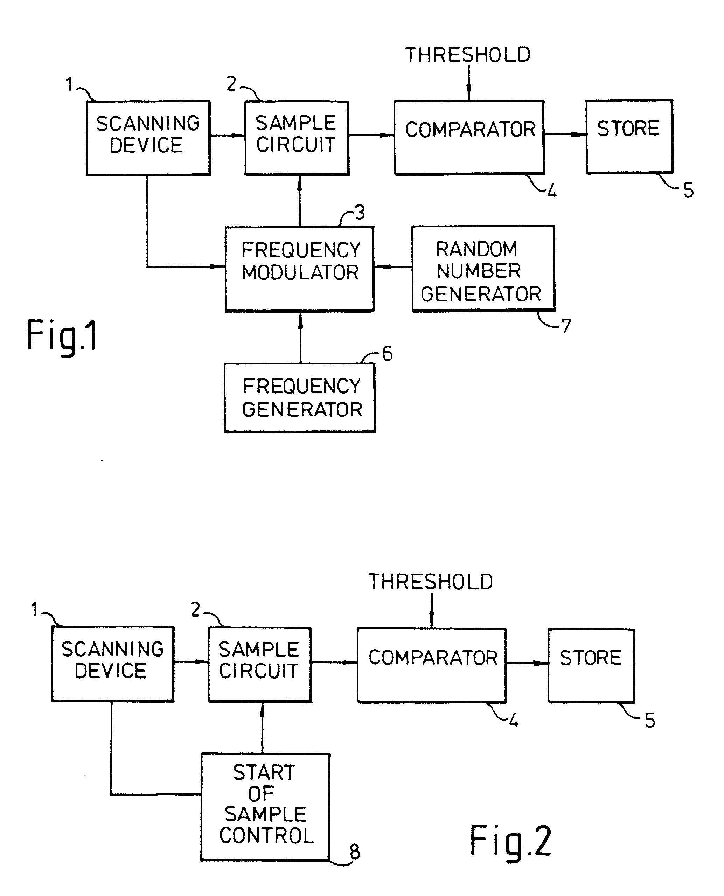

Figures 1 and 2 are schematic block diagrams of the two examples.

The apparatus shown in Figure 1 comprises a scanning device 1 which may have any conventional form. For example, the scanning device 1 may comprise a scanning spot device in which a spot of light is caused regularly to scan across an image which itself traverses beneath the moving spot so that the image is scanned in a series of lines. The intensity of the spot transmitted through the image or reflected from the image is converted to an analogue signal and output from the scanning device 1. The magnitude of the analogue signal relates to the colour density of the original image and is fed to a sample circuit 2 which samples the analogue signal at sampling times determined by a signal received from the frequency modulator 3 and outputs the sampled value in digital form to a comparator 4 which compares the sampled value with a predetermined threshold. If the sampled value excludes the threshold then the comparator 4 outputs a binary "1" but otherwise outputs a binary "0". These binary values from the comparator 4 could be transmitted to some remote apparatus as in the case of a facsimile machine or could be stored in a store 5 as shown.

The apparatus also comprises a frequency generator 6 which generates a fixed preset nominal frequency signal, this signal being fed to the frequency modulator 3 which modulates the incoming signal in accordance with a control signal from a random number generator 7. Typically, this modulation will be in accordance with the formula set out above with the value dX preset in the modulator 3.

In use, the scanning device 1 operates in a conventional manner and the sample circuit 2 responds to the signal from the frequency modulator 3 to sample the incoming analogue signal as described above. When the scanning device 1 reaches the end of a scan line it issues a suitable signal to the frequency modulator 3 which then reads a new random number from the generator 7 so as to apply a new sampling frequency to the sample circuit 2 for use during the scan of the next line.

The effect of varying the scanning frequency in this manner is now described by reference to a simple example.

Consider the effects of scanning two single lines across a 100 1pi. (lines per inch) screen. The first line could be scanned at 1000 1pi. This will produce a beat of a specific frequency. Now assume that the second line is scanned at 999 1pi. This also will produce a beat, but this will be different from the first. If the two scanned lines were placed alongside each other the beats would drift in and out of relative phase at different positions along the copy. Over several hundred or thousands of lines, each scanned at slightly different frequencies from the previous line, the peaks and troughs of the pattern appear to randomise. This effectively reduces the visible perception of a Moire pattern.

Figure 2 illustrates an alternative example in which instead of varying the sampling frequency, the start of scan position of each line is varied. In Figure 2, those components which correspond to the Figure 1 components have been allocated the same reference numerals. As can be seen, in this case, the sample circuit 2 is connected to a start of sample control circuit 8 which controls the sample circuit 2 to commence sampling successive scan lines at controlled positions. In the preferred example, successive or alternate scan lines are scanned in anti-phase so that the pixels of one scan line overlap substantially equally the pixels of the preceding and succeeding scan lines.

## Claims

1. A method of scanning an image with a constant frequency component to generate a binary representation of the image, the method comprising scanning the image in a series of lines, the image being sampled during the scanning of each line; and for each sample generating a binary output value dependent upon the relationship between the sampled value and a predetermined threshold, characterised in that one or more of the sampling frequency, the predetermined threshold, and the position at which a scan line is first sampled is varied during the sampling process.

2. A method according to claim 1, wherein the sampling frequency and/or threshold is varied after each scan line.

3. A method according to claim 1 or claim 2, wherein the sampling frequencies are selected so as to average out to a predetermined mean value.

4. A method according to any of the preceding claims, wherein the start of scan position is varied in phase between successive scan lines.

5. A method according to claim 4, wherein the start of scan position is varied in phase by 180° between successive scan lines.

6. A method according to any of the preceding claims, wherein the sampling frequency is varied in accordance with the formula:
$(X - dX) + 2.dX. RND$
where X is a nominal scanning resolution, dX is some predetermined difference value, and RND is a random number varying between zero and one.

7. Apparatus for scanning an image with a constant frequency component to generate a binary representation of the image, the apparatus comprising scanning means (1) for scanning the image in a series of lines and for sampling the image during the scanning of each line; binary signal generating means (2) for generating for each sample a binary output value dependent on the relationship between the sampled value and a predetermined threshold; and control means (3,6) for controlling one or more of the frequency at which the image is sampled during the scanning of each line, the predetermined threshold, and the position at which a scan line is first sampled the control means being adapted to generate different sampling frequencies and/or first sample positions and/or thresholds during the scanning process.

THRESHOLD

1 SCANNING DEVICE → 2 SAMPLE CIRCUIT → COMPARATOR → STORE 5

4

3 FREQUENCY MODULATOR → RANDOM NUMBER GENERATOR 7

**Fig.1**

6 FREQUENCY GENERATOR

THRESHOLD

1 SCANNING DEVICE → 2 SAMPLE CIRCUIT → COMPARATOR → STORE 5

4

START OF SAMPLE CONTROL 8

**Fig.2**

**European Patent Office**

# EUROPEAN SEARCH REPORT

Application Number

EP 91 30 4141

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 839 739 (TACHIUCHI et al.) * Abstract; figures 1-18; claims 1,5,6 * | 1,7 | H 04 N 1/40 |
| Y |  | 4,5 | |
| A | | 2 | |
| | --- | | |
| X | EP-A-0 358 184 (NYNEX CORP.) * Abstract; figure 1; column 2, line 42 - column 3, line 28 * | 1,7 | |
| A | | 2 | |
| | --- | | |
| Y | EP-A-0 038 515 (AMERICAN HOECHST CORP.) * Abstract; figures 1-5; page 1, line 27 - page 2, line 16; page 8, lines 5-27; claims 1,2 * | 4,5 | |
| | --- | | |
| A | PATENT ABSTRACTS OF JAPAN, vol. 8, no. 247 (E-278), 13th November 1984; & JP-A-59 123 367 (RICOH K.K.) 17-07-1984 * Abstract; fig. * | 1,4,5,7 | |
| | --- | | TECHNICAL FIELDS SEARCHED (Int. Cl.5) |
| A | US-A-4 422 765 (HOFFMANN) * Abstract; figures 1,2; column 4, line 61 - column 6, line 8 * | 1,2,7 | H 04 N 1/00 |
| | ----- | | |

The present search report has been drawn up for all claims

| Place of search | Date of completion of the search | Examiner |
|---|---|---|
| THE HAGUE | 22-07-1991 | KASSOW H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)